**Europäisches Patentamt**

**European Patent Office**

**Office européen des brevets**

(19)

(11) Veröffentlichungsnummer : **0 344 501 B1**

(12) **EUROPÄISCHE PATENTSCHRIFT**

(45) Veröffentlichungstag der Patentschrift :
**24.06.92 Patentblatt 92/26**

(51) Int. Cl.⁵ : **B29B 7/72**

(21) Anmeldenummer : **89108654.8**

(22) Anmeldetag : **13.05.89**

(54) **Verfahren und Vorrichtung zum kontinuierlichen Beladen mindestens einer fliessfähigen Reaktionskomponente mit Gas für dieHerstellung eines schaumstoffbildenden fliessfähigen Reaktionsgemisches.**

(30) Priorität : **28.05.88 DE 3818161**

(43) Veröffentlichungstag der Anmeldung :
**06.12.89 Patentblatt 89/49**

(45) Bekanntmachung des Hinweises auf die
Patenterteilung :
**24.06.92 Patentblatt 92/26**

(84) Benannte Vertragsstaaten :
**AT BE DE FR GB IT NL SE**

(56) Entgegenhaltungen :
**EP-A- 0 110 244**
**EP-A- 0 175 252**
**DE-A- 3 434 444**
**DE-A- 3 602 024**
**US-A- 4 376 172**

(73) Patentinhaber : **BAYER AG**
**W-5090 Leverkusen 1 Bayerwerk (DE)**

(72) Erfinder : **Krippl, Kurt**
**Niederstrasse 104**
**W-4019 Monheim (DE)**
Erfinder : **Schulte, Klaus**
**Kurt-Schumacher-Ring 91b**
**W-5090 Leverkusen 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 344 501 B1

## Beschreibung

Die Erfindung betrifft ein Verfahren und eine Vorrichtung zum kontinuierlichen Beladen mindestens einer fließfähigen Reaktionskomponente mit Gas für die Herstellung eines schaumstoffbildenden, fließfähigen Reaktionsgemisches, indem in einem Begasungsbehälter mittels eines Hohlrührers das Gas in die Reaktionskomponente eindispergiert wird und die mit Gas beladene Reaktionskomponente der Vermischung mit der anderen Reaktionskomponente zugeführt wird, wie aus DE-A1-34 34 443 bekannt.

Bei der Herstellung von Schaumstoffen aus Reaktionskomponenten, insbesondere von Polyurethanschaumstoffen durch Reaktion von Polyol mit Isocyanat, ist es oft erforderlich, neben anderen Zusätzen auch Gase vor der Vermischung der Reaktionskomponenten in mindestens eine von ihnen in einem bestimmten Verhältnis einzudispergieren (DE-A1-34 34 443).

Es ist allgemein üblich, die Dichte der begasten Komponente mit einem Sollwert zu vergleichen und bei Abweichungen die in die Reaktionskomponente einzuführende Gasmenge in der einen oder anderen Richtung zu korrigieren. Diese Technik versagt, wenn kleine und kleinste Gasmengen in die Reaktionskomponente eindispergiert werden sollen, weil dann der Dichteunterschied zwischen begaster Komponente und unbegaster Komponente nicht mehr mit ausreichender Genauigkeit meßbar ist.

Es besteht deshalb die Aufgabe, ein Verfahren und eine Vorrichtung zu schaffen, womit auch kleinste Gasmengen in mindestens eine der Reaktionskomponenten im richtigen Verhältnis eindispergierbar sind.

Gelöst wird diese Aufgabe dadurch, daß sowohl die Reaktionskomponente als auch das Gas dosiert dem Begasungsbehälter zugeführt werden, wobei die pro Zeiteinheit zugeführte Gasmenge konstant gehalten wird, indem der zugeführte Massestrom des Gases laufend gemessen, mit einem vorgegebenen Sollwert verglichen und im Sinne der Einhaltung des Sollwertes geregelt wird, und daß durch Regelung der Drehzahl des Hohlrührers die gleiche Gasmenge pro Zeiteinheit in die Reaktionskomponente eingebracht wird.

Dadurch wird erreicht, daß Gasmengen bis herab zu 2 Vol.-%, bezogen auf das Volumen der unbegasten Komponente, mit gleichbleibender Genauigkeit eindispergiert werden können. Durch die Regelungen lassen sich sowohl Schwankungen in der dem Begasungsbehälter zugeführten Gasmenge als auch Schwankungen in der Intensität der Begasung eliminieren. Selbstverständlich läßt sich ein Sollwert für die laufend zuzuführende Gasmenge vorgeben, welcher der jeweils einzudispergierenden Gasmenge entspricht. Für diese bestimmte einzudispergierende Gasmenge ist eine bestimmte Drehzahl des Hohlrührers erforderlich. Da diese von der Konstruktion des Hohlrührers und auch von der Viskosität der zu begasenden Reaktionskomponente abhängig ist, bedarf es zunächst der Erstellung entsprechender Eichkurven. Von dieser Solldrehzahl geht die Regelung aus.

Gemäß einer ersten Durchführungsform des neuen Verfahrens erfolgt die Regelung der Drehzahl des Hohlrührers durch Konstanthaltung des Niveauspiegels im Begasungsbehälter.

Gemäß einer zweiten Durchführungsform erfolgt die Regelung der Drehzahl des Hohlrührers über die Messung der dem Begasungsbehälter zuströmenden Gasmenge.

Das neue Verfahren ist insbesondere für die Zugabe von Gasanteilen unterhalb des Sättigungspunktes der begasten Komponente geeignet; es ist aber auch für die Beladung der Reaktionskomponenten mit größeren Gasmengen in gleicher Weise anwendbar.

Schließlich läßt sich das neue Verfahren, soweit es die Regelung des Gasmassenstromes betrifft, in einer Abwandlung auch für die Vormischung von zwei oder mehreren unterschiedlichen Gasen in bestimmtem Verhältnis anwenden.

Die neue Vorrichtung zum kontinuierlichen Beladen mindestens einer fließfähigen Reaktionskomponente mit Gas für die Herstellung eines schaumstoffbildenden, fließfähigen Reaktionsgemisches geht aus von einem Begasungsbehälter mit einem einen drehzahlregelbaren Antrieb aufweisenden Hohlrührer, wobei dieser Hohlrührer eine oberhalb des Niveauspiegels gelegene Gasansaugöffnung aufweist; einer Zuführleitung für die unbegaste Komponente, einer Abführleitung für die begaste Komponente sowie einer oberhalb des Niveauspiegels einmündenden Gaszuführleitung.

Das Neue ist darin zu sehen, daß in der Gaszuführleitung eine Regeleinrichtung angeordnet ist, welche aus einem Durchflußmengenregelventil mit Stellantrieb und einem mit diesem verbundenen Massestrommeßgerät für das zugeführte Gas besteht; und daß eine weitere Regeleinrichtung vorgesehen ist, welche aus einem Niveaumeßgerät und einem damit verbundenen Drehzahlregler, welcher andererseits mit dem Hohlrühreranrieb verbunden ist, besteht.

Als Dosiervorrichtung für die Reaktionskomponente eignen sich die üblichen, bisher gebräuchlichen Dosierpumpen, wie Axial- und Radialkolbenpumpen oder, insbesondere für füllstoffhaltige Komponenten, Kolbendosiergeräte. Als Gasmassestrommeßgerät eignet sich insbesondere das "digitale Betriebs- und Anzeigegerät" Typ 147 A der Fa.

MKS-Instruments Deutschland GmbH, Stahlgruberring 13, D-8000 München 82. Drehzahlregelbare elek-

2

trische Antriebe sind handelsüblich.

Die neue Vorrichtung hat den besonderen Vorteil, daß sie schneller reagiert als die bekannten, auf dem Prinzip der Dichtemessung arbeitenden. Auch Niveaumeßgeräte sind in den verschiedensten Ausführungsformen bekannt. Solche, welche eine absolut konstante Einstellung des Niveauspiegels ermöglichen, sind recht aufwendig. Es eignen sich aber auch solche, welche eine Konstanthaltung zwischen zwei Grenzwerten erlauben, sofern die Grenzwertgeber im Hinblick auf die erforderliche Genauigkeit der Begasung auf ein genügend enges Intervall einstellbar sind.

In der Zeichnung ist die neue Vorrichtung in zwei Ausführungsbeispielen rein schematisch dargestellt und nachstehend näher beschrieben.

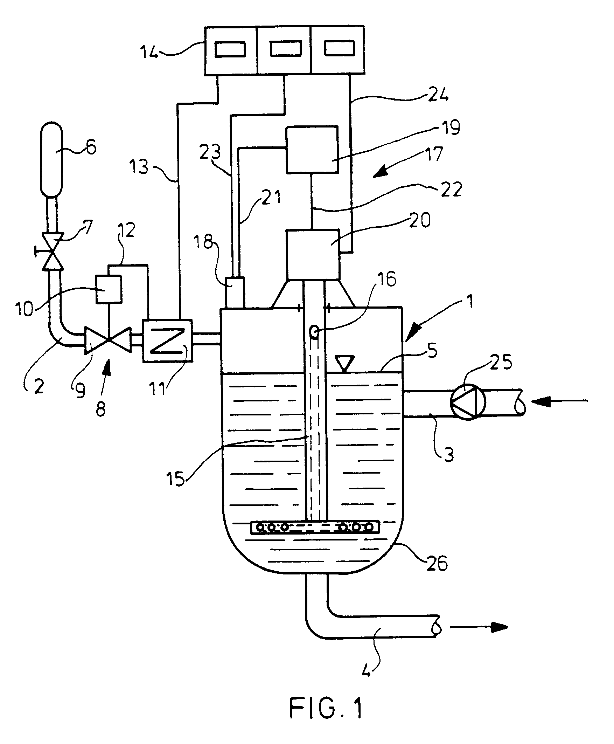

In Fig. 1 ist ein Begasungsbehälter 1 mit einer Zuführleitung 2 für Gas, einer Zuführleitung 3 für eine zu begasende Reaktionskomponente sowie mit einer Abführleitung 4 für die begaste Reaktionskomponente versehen. Die Zuführleitung 1 mündet oberhalb des Niveauspiegels 5 in den Begasungsbehälter 1 ein. Sie ist an eine Gasquelle 6 angeschlossen. In der Gaszuführleitung 2 sind, in Strömungsrichtung gesehen, ein Druckreduzierventil 7 sowie eine Regeleinrichtung 8 angeordnet. Sie besteht aus einem Durchflußmengenregelventil 9 mit Stellantrieb 10 und einem Massestrommeßgerät 11. Von letzterem führt eine Impulsleitung 12 zum Stellantrieb 10 des Durchflußmengenregelventils 9 sowie eine Impulsleitung 13 zu einer Anzeigetafel 14. Das Massestrommeßgerät 11 enthält einen Meßwertwandler und ist auf einen gewünschten Sollwert einstellbar. Weicht der tatsächlich fließende Massestrom von dem vorgegebenen Sollwert ab, werden entsprechende Impulse zum Verstellen des Durchflußmengenregelventils 9 an dessen Stellantrieb 10 gegeben. Im Begasungsbehälter 1 ist ein Hohlrührer 15 angeordnet. Seine Ansaugöffnung 16 ist oberhalb des Niveauspiegels 5 vorgesehen. Diesem Hohlrührer 15 ist ebenfalls eine Regeleinrichtung 17 zugeordnet. Sie besteht aus einem am Begasungsbehälter 1 angeordneten Niveaumeßgerät 18, welches einen Meßwertwandler enthält, sowie aus einem Drehzahlregler 19 und aus dem Antrieb 20 des Hohlrührers 15. Vom Niveaumeßgerät 18 führt eine Impulsleitung 21 zu dem Drehzahlregler 19 und von diesem eine Impulsleitung 22 zum Antrieb 20. Das Niveaumeßgerät 18 ist über eine weitere Impulsleitung 23 mit der Anzeigetafel 14 verbunden. Vom Antrieb 20 führt ebenfalls eine Impulsleitung 24 zur Anzeigetafel 14. Das Niveaumeßgerät 18 enthält zwei Grenzwertgeber, zwischen denen der Niveauspiegel 5 konstant gehalten wird. Löst der Niveauspiegel 5 den oberen Grenzwertgeber aus, wird die Drehzahl des Antriebes 20 in der Weise verändert, daß weniger Gas mittels des Hohlrührers 15 angesaugt wird. Spricht beim Abfallen des Niveauspiegels 5 der untere Grenzwertgeber an, so wird die Drehzahl in der anderen Richtung verändert. Als Ausgangsdrehzahl ist ein Erfahrungswert zugrundegelegt, bei welchem eine bestimmte gewünschte Menge an Gas in die Reaktionskomponente eindispergiert wird. In der Zuführleitung 3, welche unterhalb des Niveauspiegels 5 einmündet, ist eine Dosierpumpe 25 angeordnet. Die Abführleitung 4 führt am Boden 26 des Begasungsbehälters 1 ab und führt zu einem nicht dargestellten Mischkopf. Die Dosierpumpe 25 läßt sich auch in der Abführleitung 4 anordnen.

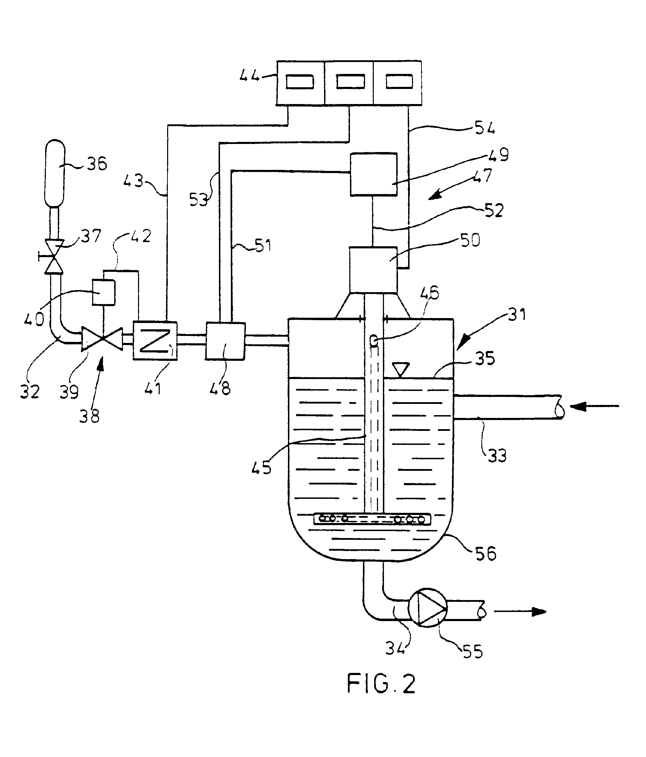

In Fig. 2 ist ein Begasungsbehälter 31 mit einer Zuführleitung 32 für Gas, einer Zuführleitung 33 für eine zu begasende Reaktionskomponente sowie mit einer Abführleitung 34 für die begaste Reaktionskomponente versehen. Die Zuführleitung 31 mündet oberhalb des Niveauspiegels 35 in den Begasungsbehälter 31 ein. Sie ist an eine Gasquelle 36 angeschlossen. In der Gaszuführleitung 32 sind, in Strömungsrichtung gesehen, ein Druckreduzierventil 37 sowie eine Regeleinrichtung 38 angeordnet. Sie besteht aus einem Durchflußmengenregelventil 39 mit Stellantrieb 40 und einem Massestrommeßgerät 41. Von letzterem führt eine Impulsleitung 42 zum Stellantrieb 40 des Durchflußmengenregelventils 39 sowie eine Impulsleitung 43 zu einer Anzeigetafel 44. Das Massestrommeßgerät 41 enthält einen Meßwertwandler und ist auf einen gewünschten Sollwert einstellbar. Weicht der tatsächlich fließende Massestrom von dem vorgegebenen Sollwert ab, werden entsprechende Impulse zum Verstellen des Durchflußmengenregelventils 39 an dessen Stellantrieb 40 gegeben. Im Begasungsbehälter 31 ist ein Hohlrührer 45 angeordnet. Seine Ansaugöffnung 46 ist oberhalb des Niveauspiegels 35 vorgesehen. Diesem Hohlrührer 45 ist ebenfalls eine Regeleinrichtung 47 zugeordnet. Sie besteht aus einem in der Gaszuführleitung 32 angeordneten Gasdurchflußmeßgerät 48, welches einen Meßwertwandler enthält, sowie aus einem Drehzahlregler 49 und aus dem Antrieb 50 des Hohlrührers 45. Vom gasdurchflußmeßgerät 48 führt eine Impulsleitung 51 zu dem Drehzahlregler 49 und von diesem eine Impulsleitung 52 zum Antrieb 50. Das Gasdurchflußmeßgerät 48 ist über eine weitere Impulsleitung 53 mit der Anzeigetafel 54 verbunden. Vom Antrieb 50 führt ebenfalls eine Impulsleitung 54 zur Anzeigetafel 44. Zeigt das Gasdurchflußmeßgerät 48 zu geringen Durchfluß an, wird die Drehzahl des Antriebes 50 in der Weise verändert, daß weniger Gas mittels des Hohlrührers 45 angesaugt wird. Zeigt es zu großen Durchfluß an, so wird die Drehzahl in der anderen Richtung verändert. Als Ausgangsdrehzahl ist ein Erfahrungswert zugrundegelegt, bei welchem eine bestimmte gewünschte Menge an Gas in die Reaktionskomponente eingebracht wird. Die Zuführleitung 33 mündet unterhalb des Niveauspiegels 35. Die Abführleitung 34, in welcher eine Dosierpumpe 55 angeordnet ist, führt am Boden 56 des Begasungsbehälters 31 ab und führt zu einem nicht dargestellten Mischkopf. Die Dosierpumpe 55 läßt sich auch in der Zuführleitung 33 anordnen.

**Patentansprüche**

1. Verfahren zum kontinuierlichen Beladen mindestens einer fließfähigen Reaktionskomponente mit Gas für die Herstellung eines schaumstoffbildenden, fließfähigen Reaktionsgemisches, indem in einem Begasungsbehälter (1, 31)) mittels eines Hohlrührers (15, 45) das Gas in die Reaktionskomponente eindispergiert wird und die mit Gas beladene Reaktionskomponente der Vermischung mit der anderen Reaktionskomponente zugeführt wird, dadurch gekennzeichnet, daß sowohl die Reaktionskomponente als auch das Gas dosiert dem Begasungsbehälter (1, 31) zugeführt werden, wobei die pro Zeiteinheit zugeführte Gasmenge konstant gehalten wird, indem der zugeführte Massestrom des Gases laufend gemessen, mit einem vorgegebenen Sollwert verglichen und im Sinne der Einhaltung des Sollwertes geregelt wird, und daß durch die Regelung der Drehzahl des Hohlrührers (15, 45) die gleiche Gasmenge pro Zeiteinheit in die Reaktionskomponente eingebracht wird.

2. Verfahren nach Anspruch 1, dadurch gekennzeichnet, daß die Regelung der Drehzahl des Hohlrührers (15) durch Konstanthaltung des Niveauspiegels (5) im Begasungsbehälter (1) erfolgt.

3. Verfahren nach Anspruch 1, dadurch gekennzeichnet, daß die Regelung der Drehzahl des Hohlrührers (45) über die Messung der dem Begasungsbehälter (31) zuströmenden Gasmenge erfolgt.

4. Vorrichtung zum kontinuierlichen Beladen mindestens einer fließfähigen Reaktionskomponente mit Gas für die Herstellung eines schaumstoffbildenden, fließfähigen Reaktionsgemisches, bestehend aus einem Begasungsbehälter (1) mit einem einen drehzahlregelbaren Antrieb (20) aufweisenden Hohlrührer (15), wobei dieser Hohlrührer (15) eine oberhalb des Niveauspiegels (5) gelegene Gasansaugöffnung (16) aufweist; aus einer Zuführleitung (3) für die unbegaste Komponente, einer Abführleitung (4) für die begaste Komponente sowie aus einer oberhalb des Niveauspiegels (5) einmündenden Gaszuführleitung (2), dadurch gekennzeichnet, daß in der Gaszuführleitung (2) eine Regeleinrichtung (8) angeordnet ist, welche aus einem Durchflußmengenregelventil (9) mit Stellantrieb (10) und einem mit diesem verbundenen Massestrommeßgerät (11) für das zugeführte Gas besteht; und daß eine weitere Regeleinrichtung (17) vorgesehen ist, welche aus einem Niveaumeßgerät (18) und einem damit verbunden Drehzahlregler (19), welcher andererseits mit dem Hohlrührerantrieb (20) verbunden ist, besteht.

5. Vorrichtung zum kontinuierlichen Beladen mindestens einer fließfähigen Reaktionskomponente mit Gas für die Herstellung eines schaumstoffbildenden, fließfähigen Reaktionsgemisches, bestehen aus einem Begasungsbehälter (31) mit einem einen drehzahlregelbaren Antrieb (50) aufweisenden Hohlrührer (45), wobei dieser Hohlrührer (45) eine oberhalb des Niveauspiegels (35) gelegene Gasansaugöffnung (36) aufweist; aus einer Zuführleitung (33) für die unbegaste Komponente, einer Abführleitung (34) für die begaste Komponente sowie aus einer oberhalb des Niveauspiegels (35) einmündenden Gaszuführleitung (32), dadurch gekennzeichnet, daß in der Gaszuführleitung (32) eine Regeleinrichtung (8) angeordnet ist, welche aus einem Durchflußmengenregelventil (39) mit Stellantrieb (40) und einem mit diesem verbundenen Massestrommeßgerät (41) für das zugeführte Gas besteht; und daß eine weitere Regeleinrichtung (47) vorgesehen ist, welche aus einem Gasdurchflußmeßgerät (48) und einem damit verbundenen Drehzahlregler (49), welcher andererseits mit dem Hohlrührerantrieb (50) verbunden ist, besteht.

**Claims**

1. A process for continuously charging at least one flowable reaction component with gas for the production of a flowable foaming reaction mixture by dispersing the gas in the reaction component in a gassing vessel (1, 31) by means of a hollow agitator (15, 45) and feeding the reaction component charged with gas to the mixing with the other reaction component, characterized by the fact that both the reaction component and the gas are fed in measured quantities to the gassing vessel (1, 31), the quantity of gas fed per unit of time being held constant by continuously measuring the mass flow of gas fed, comparing it with a predetermined desired value and adjusting it in the direction to keep to the desired value, and that by controlling the rotation speed of the hollow agitator (15, 45) a constant quantity of gas per unit of time is introduced into the reaction component.

2. A process according to Claim 1, characterized by the fact that the rotation speed of the hollow agitator (15) is controlled by maintaining constant the liquid level (5) in the gassing vessel (1).

3. A process according to Claim 1, characterized by the fact that the rotation speed of the hollow agitator (45) is controlled by measuring the quantity of gas flowing into the gassing vessel (31).

4. An apparatus for continuously charging at least one flowable reaction component with gas for the production of a flowable foaming reaction mixture, consisting of a gassing vessel (1) with a hollow agitator (15), having a controllable-speed drive (20), this hollow agitator (15) having a gas intake (16) situated above the liquid level (5); of a feed line (3) for the ungassed component, an outlet line (4) for the gassed component and a gas feed line (2) discharging above the liquid level (5), characterized by the fact that there is arranged in the gas feed line (2) a control device (8) consisting of a flow control valve (9) with an actuating unit (10) and, connected thereto, a mass flow measuring instrument (11) for the gas fed; and that a further control device (17) is provided, consisting of a level measuring instrument (18) and, connected thereto, a speed controller (19), which is connected on the other side to the hollow-agitator drive (20).

5. An apparatus for continuously charging at least one flowable reaction component with gas for the production of a flowable foaming reaction mixture, consisting of a gassing vessel (31) with a hollow agitator (45), having a controllable-speed drive (50), this hollow agitator (45) having a gas intake (36) situated above the liquid level (35); of a feed line (33) for the ungassed component, an outlet line (34) for the gassed component and a gas feed line (32) discharging above the liquid level (35), characterized by the fact that, arranged in the gas feed line (32), there is a control device (8), consisting of a flow control valve (39) with an actuating unit (40) and, connected thereto, a mass flow measuring instrument (41) for the gas fed; and that a further control device (47) is provided, consisting of a gas flowmeter (48) and, connected thereto, a speed controller (49), which is connected on the other side to the hollow-agitator drive (50).

**Revendications**

1. Procédé pour introduire en continu du gaz dans au moins un réactif fluide, en vue de la préparation d'un mélange réactionnel fluide et formant une mousse, dans lequel le gaz est dispersé dans le réactif dans un récipient de mélange avec le gaz (1, 31) au moyen d'un agitateur creux (15, 45) et le réactif contenant le gaz est introduit dans les autres réactifs pour y être mélangé, caractérisé en ce que tant le réactif que le gaz sont introduits de manière dosée dans le récipient de mélange avec le gaz (1, 31) tandis que la quantité de gaz introduite par unité de temps est maintenue constante du fait que le débit massique de gaz introduit est mesuré en continu, est comparé à une valeur nominale prédéterminée et est réglé afin de maintenir la valeur nominale et en ce que, grâce au réglage de la vitesse de rotation de l'agitateur creux (15, 45), la même quantité de gaz est introduite par unité de temps dans le réactif.

2. Procédé selon la revendication 1, caractérisé en ce que le réglage de la vitesse de rotation de l'agitateur creux (15) est assuré en maintenant constant le niveau du liquide (5) dans le récipient de mélange avec le gaz (1).

3. Procédé selon la revendication 1, caractérisé en ce que le réglage de la vitesse de rotation de l'agitateur creux (45) est assuré en mesurant la quantité de gaz introduite dans le récipient de mélange avec les gaz (31).

4. Dispositif pour introduire en continu du gaz dans au moins un réactif fluide en vue de la préparation d'un mélange réactif fluide et formant une mousse, constitué d'un récipient de mélange avec les gaz (1) avec un agitateur creux (15) comportant une commande (20) à vitesse de rotation réglable, tandis que cet agitateur creux (15) présente un orifice d'aspiration de gaz (16) situé au-dessus du niveau du liquide (5), une conduite d'adduction (3) pour le constituant sans gaz, une conduite d'évacuation (4) pour le constituant contenant le gaz ainsi qu'une conduite d'adduction de gaz (2) débouchant au-dessus du niveau du liquide (5), caractérisé en ce que, dans la conduite d'adduction de gaz (2),est disposé un dispositif de réglage (8) qui est constitué d'une vanne de réglage de débit de passage (9) avec une commande de réglage (10) et d'un appareil de mesure de débit massique (11) connecté à celle-ci pour le gaz introduit et en ce qu'il est prévu un autre dispositif de réglage (17) qui est constitué d'un appareil de mesure de niveau (18) et d'un régulateur de vitesse de rotation (19) connecté à celui-ci, qui est connecté d'autre part à la commande de l'agitateur creux (20).

5. Dispositif pour introduire en continu du gaz dans au moins un réactif fluide en vue de la préparation d'un mélange réactionnel fluide et formant une mousse, constitué d'un récipient de mélange avec le gaz (31) avec un agitateur creux (45) présentant une commande à vitesse de rotation réglable (50),tandis que cet agitateur creux (45) présente un orifice d'aspiration de gaz (36) situé au-dessus du niveau du liquide (35), une conduite d'adduction (33) pour le constituant sans gaz, une conduite d'évacuation (34) pour le constituant contenant le gaz ainsi qu'une conduite d'adduction de gaz (32) débouchant au-dessus du niveau du liquide (35), caractérisé en ce que dans la conduite d'adduction de gaz (32) est disposé un dispositif de réglage (8) qui est constitué d'une vanne de réglage de débit de passage (39) avec une commande de réglage (40) et d'un appareil de mesure de débit massique (41) connecté à celle-ci pour le gaz introduit et en ce qu'il est prévu un autre dispositif de réglage (47) qui est constitué d'un appareil de mesure de débit de passage de gaz (48) et d'un régulateur de vitesse de rotation (49) connecté à celui-ci, qui est connecté d'autre part à la commande de l'agitateur creux (50).

FIG. 1

FIG.2